# EUROPEAN PATENT SPECIFICATION

(11) **EP 2 620 305 B1**
(45) Date of publication and mention of the grant of the patent: **01.08.2018**
(21) Application number: 11826761.6
(22) Date of filing: 13.09.2011
(51) Int. Cl.: B60J 3/00, B60J 1/20

(54) **SUNSHADE DEVICE**
SONNENBLENDENVORRICHTUNG
DISPOSITIF DE TYPE PARE-SOLEIL

(30) Priority: 22.09.2010 JP 2010211991
(43) Date of publication of application: 31.07.2013
(73) Proprietor: Ashimori Industry Co., Ltd., Osaka-shi Osaka 550-0014 (JP)
(72) Inventor: KATADA Naochika, Settsu-shi Osaka 566-0001 (JP)
(74) Representative: Kilian Kilian & Partner
(86) International application number: PCT/JP2011/070781
(87) International publication number: WO 2012/039315

(56) References cited:
- DE-A1- 10 062 682
- DE-A1- 10 062 682
- DE-U1-202007 012 982
- JP-A- 2001 301 458
- JP-A- 2004 058 992
- JP-A- 2007 001 569
- JP-A- 2010 201 945

## Description

### Technical Field

The present invention relates to a sunshade device according to the preamble of claim 1.

### Background Art

A sunshade device is housed inside a peripheral member of a window (for example, an interior member such as a rear package tray in a vehicle) in some cases. In such cases, a slit is formed in the peripheral member, and the sunshade device is disposed such that a shade is drawn through the slit.

Patent Document 1 discloses a window roll-up blind applied to a rear window of a vehicle in the above-mentioned manner. That is, in the window roll-up blind of Patent Document 1, a winding shaft to which one edge of a roll-up blind sheet is fixed is arranged underneath a rear shelf, and the roll-up blind sheet is drawn through an outlet slit formed in the rear shelf, to thereby shield the rear window. Here, the configuration is made such that a pull rod to which the other edge of the roll-up blind sheet is fixed is operated by a pair of levers, whereby the roll-up blind sheet is drawn and housed.

### Prior Art Document

### Patent Document

Patent Document 1: Japanese Patent Application Laid-Open No. 2001-301458

### Summary of the Invention

### Problem to be Solved by the Invention

In a case where a sunshade device (window roll-up blind) is applied to a window (such as a rear window of a vehicle) having, for example, a trapezoidal shape in which sides opposed to each other have different lengths as shown in FIG. 1 of Patent Document 1, generally, the shade (roll-up blind sheet) itself is also formed into a shape corresponding to the shape of the window. When a shade having a short side edge and a long side edge is used, a stay for drawing the shade is attached to the short side edge at times.

In a case where a sunshade device is installed so as to draw and house the shade through a slit (outlet slot) as in Patent Document 1, the slit needs to be formed to be larger than the long side edge of the shade. In this case, there is a relationship in size where the longitudinal dimension of the slit is larger than the longitudinal dimension of the stay attached to the short side edge of the shade. As a result, the slit remains open by an amount by which the slit is longer than the stay in the state in which the shade is housed.

Therefore, the present invention has an object to cover a slit in the state in which a shade is housed.

### Means to Solve the Problem

The problem is solved with the features of the claim 1, as a first aspect.

In a second aspect, in the sunshade device according to the first aspect, the associating mechanism operates the cover body to cover the slit from a direction orthogonal to an axial direction of the windup shaft.

In a third aspect, in the sunshade device according to the first aspect, the slide member includes a first rack, the cover body includes a second rack, and the transmission mechanism includes a first gear meshing with the first rack of the slide member and a second gear that is provided so as not to rotate relative to the first gear with a rotational axis thereof coinciding with a rotational axis of the first gear and meshes with the second rack of the cover body.

In a fourth aspect, in the sunshade device according to the first aspect, the cover body includes: a cover moving member linearly moved between a closed location and an open location along a direction orthogonal to an axial direction of the windup shaft by the associating mechanism; and a cover rotating member connected to the cover moving member so as to rotate relative thereto about a connecting shaft parallel to the axial direction of the windup shaft, and configured to change a position thereof between an open position and a closed position along edges of an opening of the slit, wherein the cover rotating member is changed to the closed position upon movement of the cover moving member to the closed location and is changed to the open position upon movement of the cover moving member to the open location.

In a fifth aspect, the sunshade device according to the fourth aspect further includes: a guide part guiding the cover moving member so as to linearly move between the closed location and the open location along the direction orthogonal to the axial direction of the windup shaft; a rotation biasing member rotatively biasing the cover rotating member against the cover moving member toward the direction in which the cover rotating member changes from the open position to the closed position; and a rotation restricting part abutting against the cover rotating member to restrict the rotation of the cover rotating member from the open position toward the closed position in the state in which the cover moving member is positioned at the open location and to permit the rotation of the cover rotating member in the state in which the cover moving member is positioned at the closed location.

### Effects of the Invention

According to the sunshade device of the first aspect, the cover body, which can operate switching between the closed state of partially covering the slit and the open state of opening the slit and can cover, in the closed state, the slit together with the stay in the state in which the shade is housed, is configured to operate switching between the closed state and the open state in association with the movement of the stay by the associating mechanism so as to enter the closed state in the housed state of the shade. This enables to cover the slit in the housed state of the shade also in a case where a shade having a short side edge and a long side edge is used.

According to the sunshade device of the second aspect, the associating mechanism operates the cover body to cover the slit from the direction orthogonal to the axial direction of the windup shaft, whereby the space for moving the cover body in the axial direction of the windup shaft can be omitted. Accordingly, the sunshade device is also applicable to a case where it is difficult to secure the space in the axial direction.

According to the sunshade device of the third aspect, the slide member is provided to be pushed by the stay that has entered the slit and is biased toward the drawing side in the drawing and housing direction of the shade by the slide biasing member. The configuration is made such that the cover body is operated by the transmission mechanism as the slide member moves. This enables the operation of opening/closing the cover body with the aid of the moving force toward the housing direction of the stay that is moved when the shade is housed.

According to the sunshade device of the fourth aspect, the first gear and the second gear provided so as not to rotate relative thereto are configured to mesh with the first rack of the slide member and the second rack of the cover body, respectively. The cover body is moved through meshing of gears as described above, which enables to move the cover body accurately in association with the movement of the stay. Also, the amount of movement of the cover body to the amount of movement of the slide member can be adjusted by merely changing the gear ratio between the first gear and the second gear.

According to the sunshade device of the fifth aspect, the cover body includes the cover moving member that is linearly moved between the open location and the closed location by the associating mechanism and the cover rotating member that is connected to the cover moving member so as to rotate relative thereto and can change its position between the open position and the closed position. As described above, the slit can be covered also in a case where the width direction of the slit is not parallel to the moving direction of the cover moving member, whereby the sunshade device is also applicable to a case where it is difficult to secure the space for retracting the cover body in the width direction of the slit through a linear movement.

According to the sunshade device of the sixth aspect, the guide part guides the cover moving member to linearly move, and the rotation restricting part restricts and permits the rotation of the cover rotating member depending on the location of the cover moving member. Therefore, the cover body can be opened/closed more accurately.

### Brief Description of Drawings

FIG. 1 is a view showing a sunshade device in a state in which a shade is housed.
FIG. 2 is a view showing the sunshade device in a state in which the shade is drawn.
FIG. 3 is a view showing a state in which a slit is covered.
FIG. 4 is a view showing a state in which the slit is opened.
FIG. 5 is a perspective view showing a cover body and an associating mechanism in a closed state.
FIG. 6 is a perspective view showing the cover body and the associating mechanism in an open state.
FIG. 7 is a side view showing the cover body and the associating mechanism in the closed state.
FIG. 8 is a side view showing the cover body and the associating mechanism in the open state.
FIG. 9 is a view on arrow A of FIG. 8, which shows the relationship between a cover moving member and a guide part.
FIG. 10 is a view showing a connecting portion of the cover moving member and a cover rotating member.
FIG. 11 is a side view showing the relationship between the cover body and a stay in the closed state.
FIG. 12 is a plan view showing the relationship between the cover body and the stay in the closed state.
FIG. 13 is a side view showing the relationship between the cover body and the stay during operation.
FIG. 14 is a plan view showing the relationship between the cover body and the stay during operation.
FIG. 15 is a side view showing the relationship between the cover body and the stay in the open state.
FIG. 16 is a plan view showing the relationship between the cover body and the stay in the open state.

### Embodiment for Carrying Out the Invention

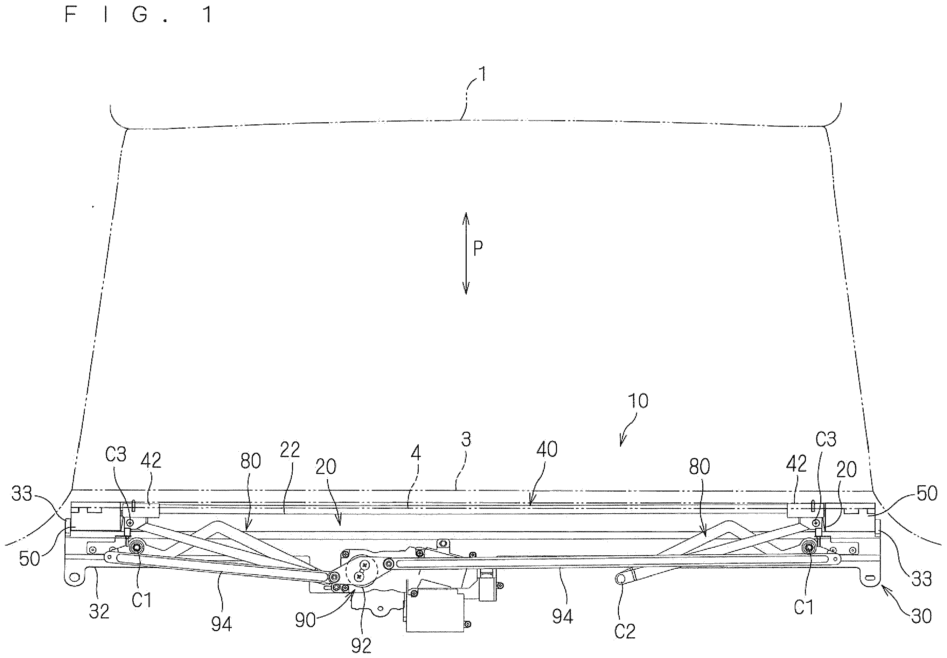

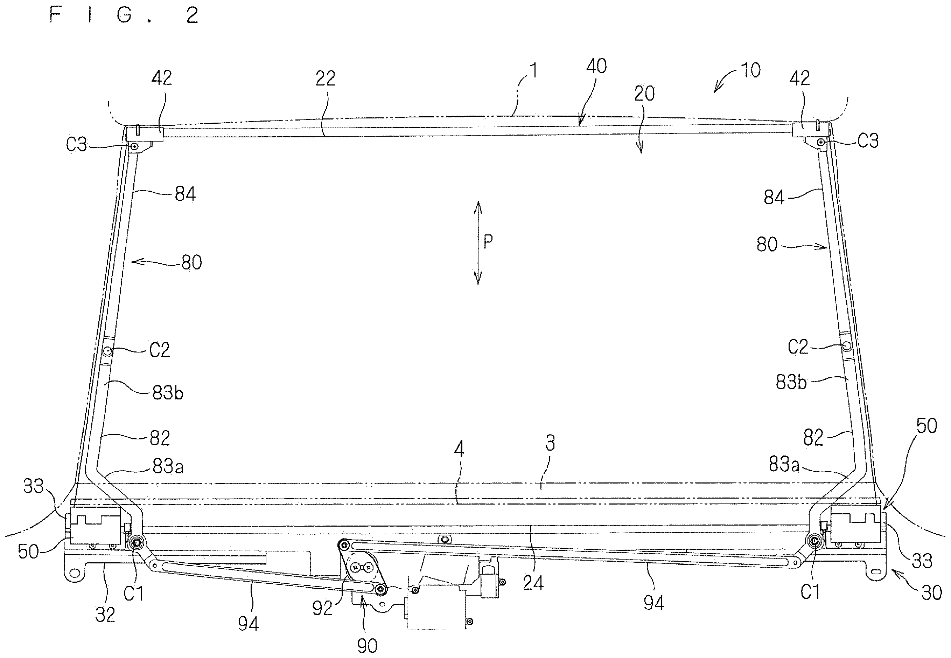

Hereinbelow, a sunshade device 10 according to an embodiment is described (see FIGS. 1 and 2).

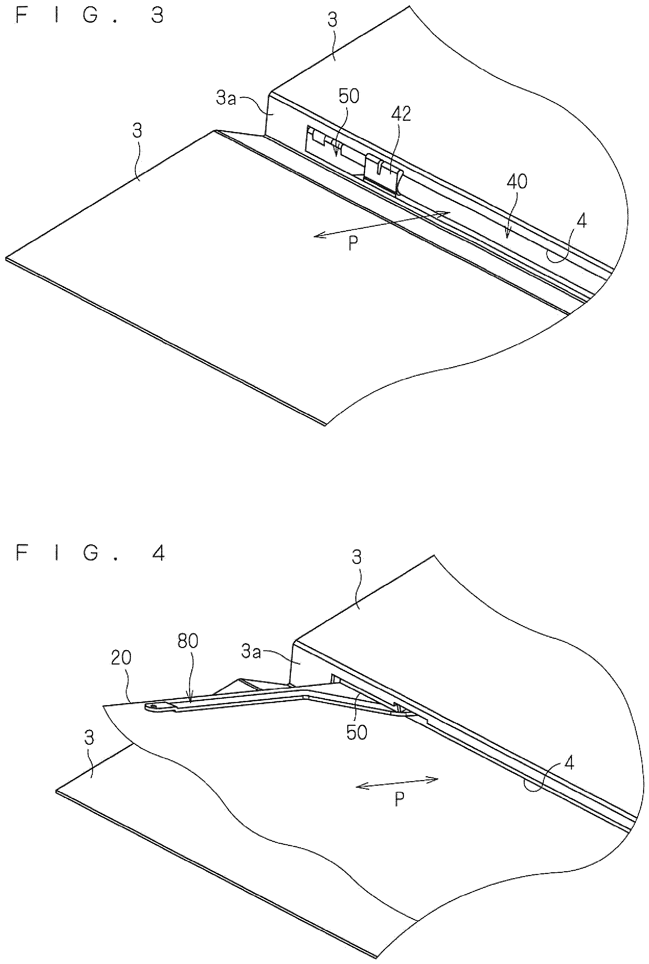

The sunshade device 10 is provided for shielding a window 1. The sunshade device 10 is disposed inside a window peripheral member in which a slit 4 is formed, and a shade 20 is drawn therefrom and housed therein through the slit 4 (see FIG. 4). The sunshade device 10 is configured so as to entirely cover the slit 4 in the state in which the shade 20 is housed (see FIG. 3).

For the sake of description, the window 1 to which the sunshade device 10 is applied is described.

Description is given here of an example in which the sunshade device 10 is applied to the window 1 that is a rear window of a vehicle. The window 1 is formed into an approximately isosceles trapezoidal shape having a short side and a long side opposed to each other (see FIGS. 1 and 2).

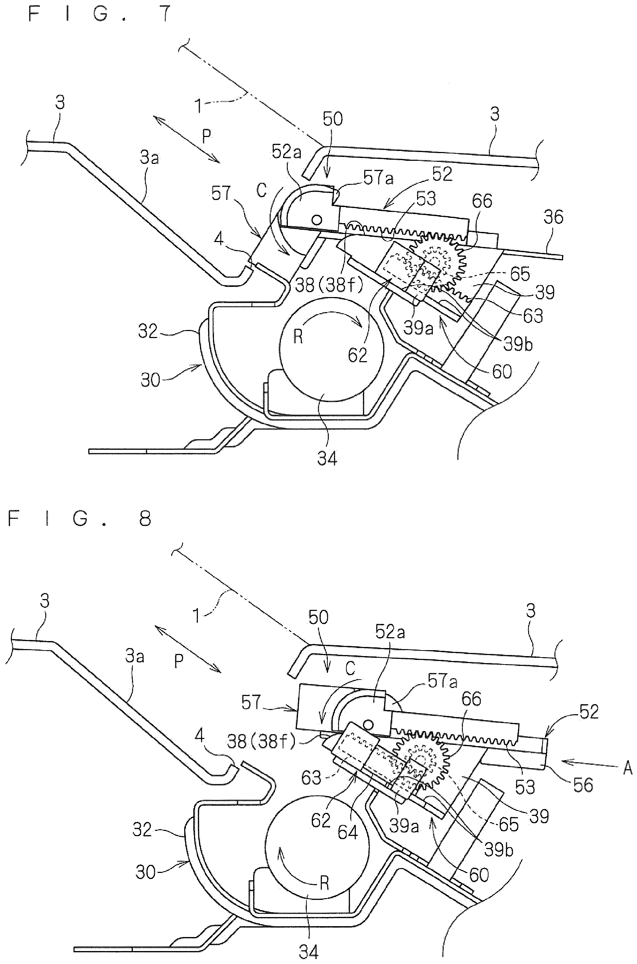

The sunshade device 10 is disposed inside a rear package tray 3 (in a case of a hatch back type, an interior member such as a trim below a window) as a window peripheral member that is located on the long edge side (floor side of a vehicle) of the window 1. The slit 4 for drawing the shade 20, which is open toward the inside of a vehicle, is formed in the rear package tray 3. The slit 4 is formed into a narrow through-hole shape extending substantially linearly along the width direction of a car body. Hereinbelow, for the sake of description, the width direction of the car body is referred to as a longitudinal direction of the slit 4, and a direction (direction of a smaller dimension) orthogonal to the longitudinal direction is referred to as a width direction of the slit 4. More specifically, the slit 4 is set to have a dimension (dimension larger than that of a long side edge 24 in relation to the shade 20 described below) substantially identical to that of the long side of the window 1. The width dimension of the slit 4 is set to a dimension large enough to dispose a stay 40 described below therein. Here, the slit 4 is formed to be open on one wall surface of a groove part 3a formed in the rear package tray 3. The slit 4 is formed in a position in which an edge of the opening thereof is located on a plane substantially orthogonal to the window 1 (see FIGS. 7 and 8).

Needless to say, the sunshade device 10 is also applicable to other windows such as a side window of a vehicle, not limited to a rear window of a vehicle as described above. It suffices that in the application to those windows, the sunshade device 10 is disposed inside a trim as a window peripheral member and other interior member and a slit is formed in those parts.

The sunshade device 10 includes the shade 20, a windup device 30, the stay 40, cover bodies 50, and associating mechanisms 60.

The shade 20 is formed by, for example, cutting and sewing a mesh-like fabric material, resin sheet, or the like in a size and a shape so as to shield the window 1. More specifically, the shade 20 is formed into a shape (here, isosceles trapezoidal shape) having a short side edge 22 and the long side edge 24 opposed to each other (see FIGS. 1 and 2).

Needless to say, the shade 20 may have a trapezoidal shape other than an isosceles trapezoidal shape or a shape in which side edges are, for example, curved, as long as it includes the short side edge 22 and the long side edge 24 and is capable of shielding the window 1.

The shade 20 is attached to the windup device 30 to be drawn therefrom and housed therein. The windup device 30 includes a base 32, rotation support parts 33, and a windup shaft 34 (see FIGS. 1 and 2).

The base 32 is a member formed by, for example, cutting and bending a metal plate or a member formed of metal by extrusion molding.

The windup shaft 34 is a long cylindrical member and is supported on the base 32 so as to rotate about an axis by the rotation support parts 33. The long side edge 24 of the shade 20 is attached to the outer peripheral surface of the windup shaft 34 along the axial direction thereof. As a result, the shade 20 is wound around the windup shaft 34 upon rotation of the windup shaft 34.

The windup shaft 34 is rotatively biased against the rotation support parts 33 toward the direction (windup direction R) in which the shade 20 is wound by biasing members (such as coil springs, not shown).

The windup device 30 is disposed inside the rear package tray 3 located on the long edge side of the window 1. More specifically, the windup device 30 is located so as to draw the shade 20 wound by the windup shaft 34 toward the inner side of the car through the slit 4. That is, the shade 20 can be drawn and housed from and in the windup device 30 through the slit 4. The windup device 30 is supported at the above-mentioned location after the base 32 is fixed to a car body, an interior member (including the rear package tray 3), an inner panel of a door, or the like by, for example, screwing.

The stay 40 for drawing the shade 20 is attached to the short side edge 22 of the shade 20 (see FIGS. 1 and 2). The stay 40 has a shape in which terminal members 42 are mounted at both ends of a long rod-like member. The short side edge 22 of the shade 20 is attached to the stay 40 without sagging. Here, the longitudinal dimension of the stay 40 is set to be substantially identical to the dimension of the short side edge 22 of the shade 20.

The stay 40 is operated to move in the direction substantially orthogonal to the axial direction of the windup shaft 34 against the windup force of the windup device 30, whereby the shade 20 can be drawn through the slit 4. Here, the shade 20 is drawn along the window 1. The directions in which the shade 20 is drawn and housed are referred to as a drawing and housing direction P. The state in which the shade 20 is drawn until the whole of the window 1 is shield is referred to as a drawn state of the shade 20 (see FIGS. 2 and 4).

In the state in which the stay 40 is not operated for drawing, the shade 20 is maintained in the housed state of being wound around the windup shaft 34 by the windup force of the window device 30 (see FIGS. 1 and 3). In this state, the stay 40 is disposed in the slit 4 (location surrounded by edges of an opening of the slit 4) and covers the slit 4 partially (in this case, center portion) in the longitudinal direction. Needless to say, "in the slit 4" is not strictly limited to the location surrounded by the edges of the opening thereof, but includes the location slightly closer to the housing side (inner side of the rear package tray 3). That is, in the housed state of the shade 20, the stay 40 slightly enters the housing side beyond the slit 4 in some cases.

Here, the state in which the stay 40 covers the slit 4 is not limited to the state in which the slit 4 is covered entirely in its width direction, and it suffices that the slit 4 is covered to such an extent that the structure (including the windup device 30) inside of the rear package tray 3 is hidden from outside. Preferably, as to the relationship in size between the stay 40 and the slit 4, it suffices that the width of the stay 40 is slightly smaller than the width dimension of the slit 4 on the plane on which the edges of the opening of the slit 4 is located in the state in which the stay 40 are disposed in the slit 4.

The stay 40 is restricted from moving such that the shade 20 is not wound further at the location at which slide members 62 described below are pushed (state in which the shade 20 is housed). The configurations adoptable as the configuration for restricting the stay 40 from moving in the housed state of the shade 20 include the configuration in which the stay 40 is locked to the slide members 62 per se at the location at which the side members 62 stop moving on the housing side and the configuration in which a stopper for locking the stay 40 is provided to the windup device 30 or the rear package tray 3.

As described above, in the sunshade device 10 including the shade 20 with the short side edge 22 and the long side edge 24, the slit 4 is formed to be longer than the long side edge 24 so as to allow the long side edge 24 (portion located in the slit 4 in the drawn state of the shade 20) to pass therethrough. Meanwhile, the stay 40 is formed correspondingly to the short side edge 22 of the shade 20 that is shorter than the long side edge 24 thereof to have a longitudinal dimension smaller than the longitudinal dimension of the slit 4.

Accordingly, in the housed state of the shade 20, a portion that is not covered by the stay 40 is generated at a position on the side (in this case, both sides) in the longitudinal direction of the stay 40 disposed in the slit 4. This results in the state in which the slit 4 remains partially open by an amount by which the slit 4 is longer than the stay 40 also in the housed state of the shade 20.

Therefore, the sunshade device 10 employs the configuration in which the slit 4 is covered entirely in the housed state of the shade 20.

Note that this problem arises from the shape of the shade 20 having the short side edge 22 and the long side edge 24 as described above and does not directly relate to the shape of the window 1. That is, while the shade 20 is generally formed into a shape corresponding to the shape of the window 1 (in the case of a trapezoidal shape, into a trapezoidal shape), the shade 20 having the short side edge 22 and the long side edge 24 may be used even in a case of a window that does not have a short side and a long side. That is, the sunshade device 10 is also applicable to a window having a shape other than the shape having a short side and a log side described above.

Hereinbelow, description is given of the configuration in which the slit 4 is covered entirely in the housed state of the shade 20.

The cover body 50 is configured to operate switching between a closed state of partially covering the slit 4 (see FIGS. 3, 5, and 7) and an open state of opening the slit 4 (see FIGS. 4, 6, and 8). In the closed state, the cover bodies 50 are capable of covering the slit 4 entirely together with the stay 40 in the housed state of the shade 20 (see FIG. 3). More specifically, the closed state of the cover body 50 refers to the state in which the cover body 50 covers the side of the slit 4 in the longitudinal direction of the stay 40 in the housed state of the shade 20. Meanwhile, the open state of the cover body 50 refers to the state in which the cover body 50 retracts from the closed state so as not to interfere with a side edge 26 of the shade 20 in the drawn state. This open state is not limited to the state in which the slit 4 is not shielded at all. In this case, the stay 40 is configured to cover the center portion in the longitudinal direction of the slit 4 in the housed state of the shade 20, and thus, two cover bodies 50 are provided so as to respectively cover the open portions of the slit 4 on both sides of the stay 40.

Needless to say, it suffices that the cover body 50 is capable of covering the portions of the slit 4, which are opened on the sides in the longitudinal direction of the stay 40, in the housed state of the shade 20. That is, in a case where the stay 40 is disposed to lean to one side in the longitudinal direction of the slit 4 in the housed state of the shade 20 (for example, in a case of a shade formed into a trapezoidal shape with a right angle), the cover body 50 may be provided on only the other side in the longitudinal direction of the stay 40. The number of associating mechanisms 60 described below is determined by the number of cover bodies 50 as well.

The cover body 50 is disposed so as to operate on the housing side with respect to the slit 4, that is, inside of the rear package tray 3. The housing side with respect to the slit 4 includes the location inside the slit 4, that is, the location on the inner side of the edge of the opening of the slit 4.

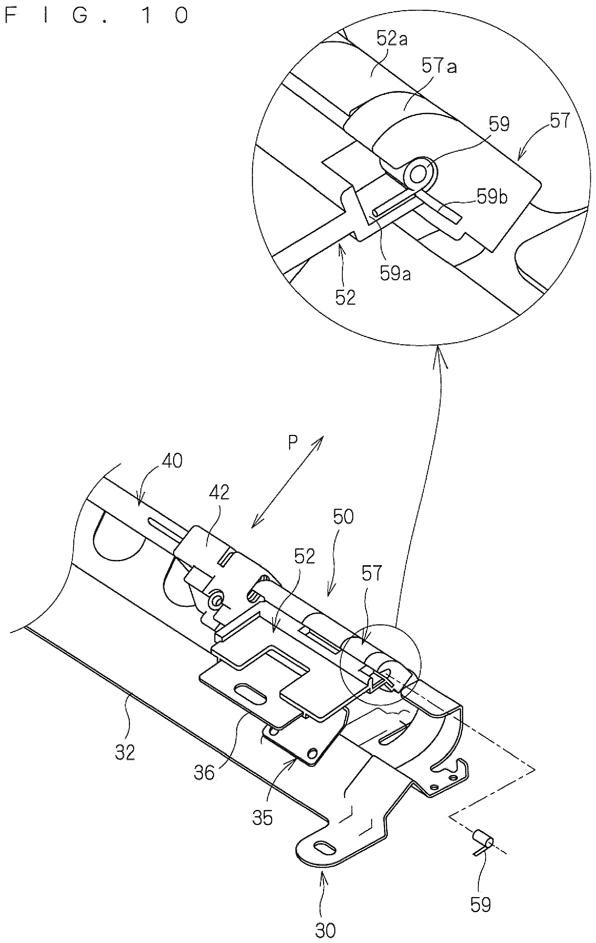

The cover body 50 includes a cover moving member 52, a cover rotating member 57, and a rotation biasing member 59 (see FIG. 10). More specifically, the cover rotating member 57 is connected to the distal end of the cover moving member 52 so as to rotate relative thereto about a connecting shaft, and the rotation biasing member 59 is provided so as to cause the cover rotating member 57 to rotate in one direction (cover rotation direction C) about the connecting shaft with respect to the cover moving member 52. Then, the portions at both ends in the longitudinal direction of the slit 4 are covered mainly by the cover rotating members 57 through the position change of the cover rotating members 57.

The sunshade device 10 according to the present embodiment is applied to the window 1 being a rear window, and is configured to draw the shade 20 through the slit 4 formed to be open on one wall portion of a groove part 3a of the rear package tray 3. Therefore, a top surface portion of the rear package tray 3 extends on the ceiling side (upper side in FIGS. 7 and 8) of a car body with respect to the one wall portion of the groove part 3a in which the slit 4 is formed. In a case where the sunshade device 10 is applied to such a location, at times, the retraction space for the cover body 50 cannot be secured with the configuration in which the cover body 50 is merely caused to move linearly along the plane on which the edges of the opening of the slit 4 extend. The above-mentioned configuration of the cover body 50 is employed for causing the cover body 50 to operate in a limited space such as the space inside the rear package tray 3.

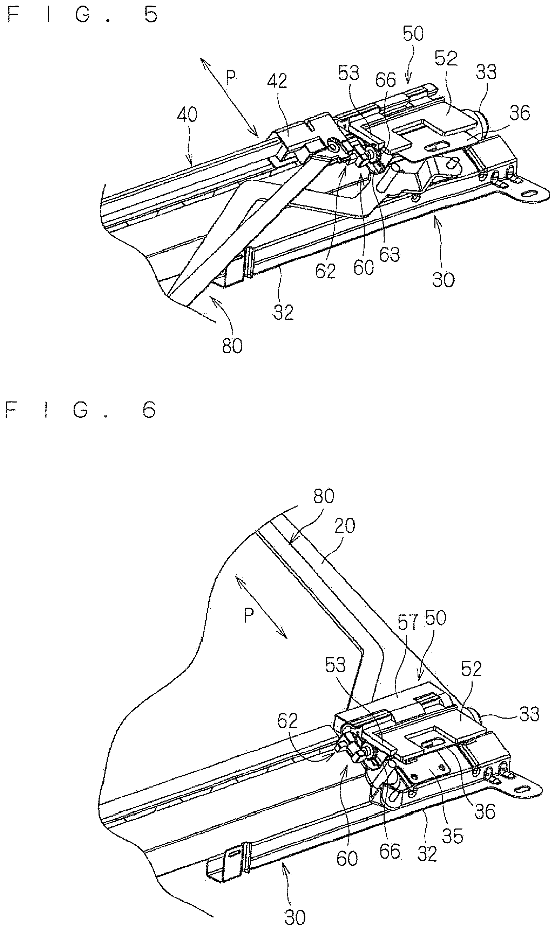

The cover moving member 52 includes a connecting part 52a for connecting the cover rotating member 57 at one end of an approximately rectangular-plate-like portion and includes, at an end on one side thereof, a second rack 53 meshing with a second gear 66 of the associating mechanism 60 described below (see FIGS. 5 and 6). The cover moving member 52 is capable of moving linearly between the closed location and the open location along the direction substantially orthogonal to the axial direction of the windup shaft 34 (see FIGS. 7 and 8). More specifically, the cover moving member 52 is supported by a support part 35 including a guide part 36 on the windup device 30 so as to move linearly.

The support part 35 is a member formed to be fixed to the base 32 of the windup device 30 by, for example, screwing (see FIG. 10). The support part 35 is configured to hold the guide part 36 in a position and at a location described below in the state of being fixed to the base 32.

The guide part 36 is configured to guide the cover moving member 52 between the closed location and the open location along the direction substantially orthogonal to the axial direction of the windup shaft 34. More specifically, the guide part 36 is capable of guiding the cover moving member 52 in a direction in which the cover moving member 52 becomes apart from the slit 4 in a position in which the cover moving member 52 extends substantially along the upper surface portion of the rear package tray 3. Here, the guide part 36 is formed into a rectangular-plate shape, extends along the direction substantially orthogonal to the axial direction of the windup shaft 34 (here, substantially along the upper surface portion of the rear package tray 3), and is provided so as to be in a position in which the width direction thereof is substantially parallel to the axial direction of the windup shaft 34. Here, the guide part 36 is held at the location on the upper surface portion side of the rear package tray 3 with respect to the windup shaft 34. That is, the guide part 36 guides the cover moving member 52 such that the cover moving member 52 is moved at the location between the windup shaft 34 and the upper surface portion of the rear package tray 3.

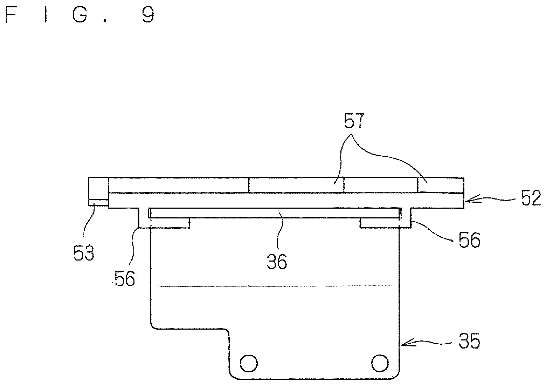

Meanwhile, the cover moving member 52 includes guided portions 56 movably fitted to the guide part 36 along the extending direction thereof (see FIG. 9). More specifically, the guided portions 56 are provided, in a pair of groove-like portions provided with opening sides thereof being opposed to each other, on one main surface of the portion having an approximately rectangular plate shape of the cover moving member 52. Here, the guided portion 56 is formed to extend such that the cover moving member 52 moves along the direction in which one end and the other end thereof are linked, along the direction in which the one end and the other end are linked.

In the state in which the guided portions 56 are fitted to the guide part 36, the cover moving member 52 is allowed to move along the extending direction of the guide part 36, that is, the direction in which it is substantially orthogonal to the axial direction of the windup shaft 34 and becomes apart from the slit 4, and is supported on the base 32 of the windup device 30. The cover moving member 52 is moved between the closed location at which it is close to the slit 4 with one end thereof being located within the slit 4 or on the side slightly closer to the housing side with respect to the slit 4 and the open location at which it is apart from the slit 4.

The cover rotating member 57 is formed into a shape so as to cover the portions of the slit 4 that are opened on sides of the stay 40 in the housed state. Here, the cover rotating member 57 is formed into an approximately rectangular solid shape that is flat. In a position in which the cover rotating member 57 extends along the plane on which the edges of the opening of the slit extend, the cover rotating member 57 is shaped so as to partially cover the slit 4 in the longitudinal direction (here, side portion of the stay 40) in the state of being disposed within the slit 4 or on the side closer to the housing side (see FIGS. 3 and 7). The cover rotating member 57 includes a connecting part 57a for connecting the cover moving member 52 at a proximal end thereof.

The cover rotating member 57 is connected to the cover moving member 52 so as to rotate relative thereto about the connecting shaft substantially parallel to the axial direction of the windup shaft 34. The cover moving member 52 and the cover rotating member 57 are connected to each other when the connecting part 52a and the connecting part 57a are connected to each other. Here, through holes are formed along the width direction in the connecting part 52a and the connecting part 57a. A connecting shaft member is inserted into the through holes in the state in which the central axes of the through holes of the connecting part 52a and the connecting part 57a are caused to coincide with each other, whereby the cover moving member 52 and the cover rotating member 57 are connected to each other so as to rotate relative thereto about a shaft (connecting shaft) of the connecting shaft member.

The cover rotating member 57 is capable of changing its position between the closed position and the open position. The closed position of the cover rotating member 57 refers to the position along the edges of the opening of the slit 4, more specifically, the position in which one main surface thereof is substantially parallel to the surface on which the edges of the opening extend (see FIG. 7). Meanwhile, the open position of the cover rotating member 57 refers to the position in which the cover rotating member 57 is positioned to be substantially collinear with the cover moving member 52 (extends substantially along the upper surface portion of the rear package tray 3) in side view (see FIG. 8). That is, in the open position, the direction in which one end and the other end of the cover moving member 52 are linked is parallel to the direction in which the distal end and the proximal end of the cover rotating member 57 are linked. Note that the closed position of the cover rotating member 57 is the position in which the cover rotating member 57 is rotated toward the cover rotation direction C from the open position.

It suffices that the cover rotating member 57 is restricted from rotating further toward the cover rotation direction C or the direction opposite thereto from the closed position and the open position so as to keep a position in the closed position or the open position. For example, the configuration in which the cover rotating member 57 abuts against the cover moving member 52 from the rear side in the cover rotation direction C in the closed position and the configuration in which the cover rotating member 57 abuts against the cover moving member 52 from the front side in the cover rotation direction C in the open position can be provided to the cover rotating member 57 for restricting the rotation.

The cover rotating member 57 is rotatively biased against the cover moving member 52 by the rotation biasing member 59 toward the direction (cover rotation direction C) in which the position is changed from the open position to the closed position (see FIG. 10). More specifically, the rotation biasing member 59 is a spring that acts a biasing force toward the cover rotation direction C about the connecting shaft of the cover moving member 52 to the cover rotating member 57. Here, a torsion coil spring is employed as the rotation biasing member 59. Needless to say, springs such as a leaf spring and a power spring can be employed as the rotation biasing member 59 as well. Recesses 59a and 59b for disposing the rotation biasing member 59 are formed in the cover moving member 52 and the cover rotating member 57, respectively.

Here, the state in which the cover moving member 52 is positioned at the closed location and the cover rotating member 57 is in the closed position is the closed state of the cover body 50 (see FIG. 7). In this state, the cover body 50 covers the portion of the slit 4 on the side of the stay 40 in the housed state of the shade 20 (see FIG. 3). Meanwhile, the state in which the cover moving member 52 is positioned at the open location and the cover rotating member 57 is in the open position is the open state of the cover body 50 (see FIG. 8). In this state, the cover body 50 opens the portion of the slit 4 on the side of the stay 40 in the housed state of the shade 20 (see FIG. 4).

The cover body 50 operated to be switched between the closed state and the open state as described above operates when the cover rotating member 57 rotates in association with the linear movement of the cover moving member 52. More specifically, a rotation restricting part 38 is provided, which is capable of restricting the rotation of the cover rotating member 57 by the biasing force of the rotation biasing member 59 (see FIGS. 7 and 8). The rotation restricting part 38 is a member that comes in contact with or non-contact with the cover rotating member 57 depending on the location of the cover rotating member 57 that changes as the cover moving member 52 moves, to thereby restrict the cover rotating member 57 from rotating from the open position toward the closed position correspondingly to the movement of the cover moving member 52.

The rotation restricting part 38 includes a restriction surface 38f that can abut against, from the front side in the cover rotation direction C, the portion of the cover rotating member 57 on the distal end side from the connecting shaft thereof. The rotation restricting part 38 restricts the rotation when the restriction surface 38f comes into contact with the cover rotating member 57 in the state in which the cover moving member 52 is at the open location, and releases the restriction of rotation when the restriction surface 38f does not come into contact with the cover rotating member 57 in the state in which the cover moving member 52 is at the closed location. That is, the cover rotating member 57 is restricted from rotating in the cover rotation direction C at the location at which it is in contact with the restriction surface 38f while being in contact with the restriction surface 38f. Meanwhile, the cover rotating member 57 is allowed to change its position to the closed position at the location at which it is not in contact with the restriction surface 38f.

Here, the rotation restricting part 38 is fixed to the support part 35 in front of the guide part 36 in the extending direction of the guide part 36 (on the slit 4 side) to be supported on the base 32 of the windup device 30. Then, the restriction surface 38f has a planar portion substantially parallel to the moving direction of the cover moving member 52 and the axial direction of the windup shaft 34. That is, in the state in which the portion of the cover rotating member 57 on the distal end side from the connecting shaft thereof is in contact with the planar portion, the cover rotating member 57 is restricted from rotating while being in the open position.

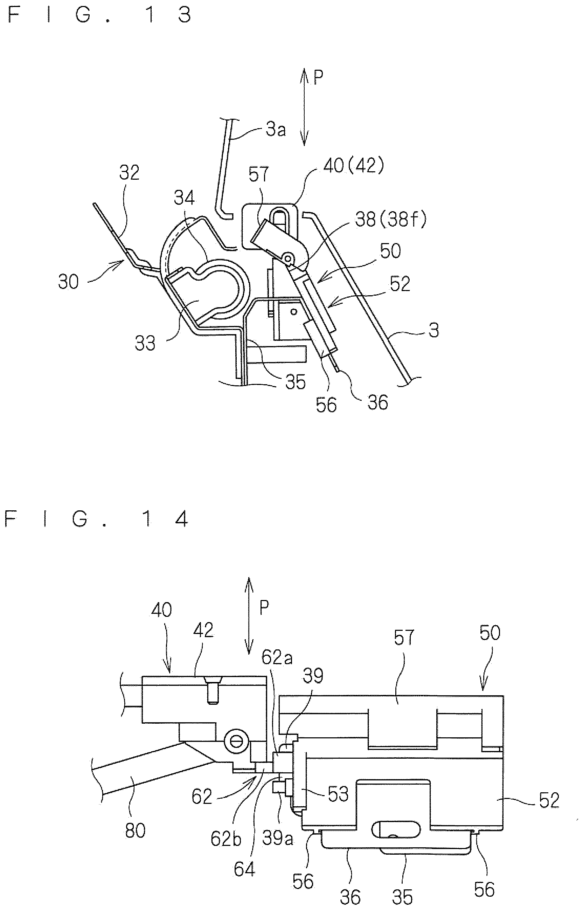

The restriction surface 38f has a curved portion that is formed continuously from the distal end side of the planar portion and gradually approaches the surface parallel to the surface on which the edges of the opening of the slit 4 extend as closer to the slit 4 side. That is, in the state in which the portion of the cover rotating member 57 on the distal end side from the connecting shaft thereof is in contact with the curved portion, the cover rotating member 57 is restricted from rotating so as to enter the position corresponding to the tilt angle of the curved portion, with which the above-mentioned portion of the cover rotating member 57 comes into contact, to the planar portion between the open position and the closed position (see FIG. 13). The cover rotating member 57 is in the closed position in the state of being in contact with the portion parallel to the surface of the restriction surface 38f, on which the edges of the opening of the slit 4 extend.

It is preferable that the rotation restricting part 38 be formed so as to rotate the cover rotating member 57 at the location at which the distal end thereof advances as little as possible to the outside of the rear package tray 3 through the slit 4 in a case where the cover moving member 52 is moved from the open location to the closed location. That is, the cover body 50 is operated on the housing side with respect to the slit 4. Here, the rotation restricting part 38 is set to restrict the cover rotating member 57 from rotating such that before the cover moving member 52 is moved from the open location to the closed location, the cover rotating member 57 can change its position from the open position to the closed position.

The associating mechanism 60 is configured to operate the cover body 50 to switch between the closed state and the open state in association with the movement of the stay 40 so as to be closed in the housed state of the shade 20. More specifically, the associating mechanism 60 operates the cover body 50 in association with the action of the force by which the stay 40 moves. The associating mechanism 60 is configured to operate the cover body 50 in association with the movement of the stay 40 that has reached the vicinity of the location at which the shade 20 is housed, that is, has entered the slit 4. Here, the associating mechanism 60 operates the cover body 50 to cover the slit 4 from the direction orthogonal to the axial direction of the windup shaft 34.

The associating mechanism 60 includes a slide member 62, a slide biasing member 64, and a transmission mechanism (see FIGS. 7 and 8). Here, the associating mechanism 60 is supported on the center side of the windup shaft 34 with respect to an associating mechanism support part 39 integrally provided with the rotation restricting part 38 supported by the support part 35.

The slide member 62 is capable of moving along the drawing and housing direction P of the shade 20 and is provided on the moving track of the stay 40 that has entered the slit 4. Also, the slide member 62 is biased toward the drawing side of the drawing and housing direction P by the slide biasing member 64. That is, the slide member 62 can be pushed by the stay 40 that is moved toward the housing side of the drawing and housing direction P of the shade 20 and enters the slit 4. Then, the slide member 62 is pushed back toward the drawing side by the biasing force of the slide biasing member 64 when the stay 40 is moved toward the drawing side from the state in which the slide member 62 is pressed by the stay 40.

More specifically, the slide member 62 includes a spring receiving part 62a that receives one end of the slide biasing member 64, a protrusion 62b that protrudes toward the moving track of the stay 40 (toward the center side of the windup shaft 34) from the spring receiving part 62a, and a first rack 63 that meshes with a first gear 65 of the transmission mechanism described below. The slide member 62 is supported so as to move along the drawing and housing direction P of the shade 20 with respect to the associating mechanism support part 39. Here, the associating mechanism support part 39 includes guide pieces 39b that guide the spring receiving part 62a and the first rack 63 along the drawing and housing direction P (moving directions of the stay 40 that has entered the slit 4). The guide piece 39b has a guide surface extending along the drawing and housing direction P, and is capable of guiding the slide member 62 along the drawing and housing direction P in the state in which the spring receiving part 62a and the first rack 63 are in surface contact therewith.

The associating mechanism support part 39 is provided with a spring receiving part 39a that receives the other end of the slide biasing member 64, at the location at which it is opposed to the spring receiving part 62a of the slide member 62 on the housing side. The slide biasing member 64 is disposed between the spring receiving part 62a of the slide member 62 and the spring receiving part 39a of the associating mechanism support part 39 (see FIG. 8). Here, a compression coil spring is employed as the slide biasing member 64. Needless to say, it suffices that the slide biasing member 64 is a biasing member capable of acting the biasing force for enlargement toward one direction, and a leaf spring or the like may be employed.

The transmission mechanism is configured to operate the cover body 50 (here, move the cover moving member 52) as the slide member 62 moves. More specifically, the transmission mechanism includes the first gear 65 and the second gear 66 (see FIGS. 7 and 8).

The first gear 65 is a spur gear meshing with the first rack 63 of the slide member 62. The second gear 66 is a spur gear meshing with the second rack 53 of the cover moving member 52 of the cover body 50. The first gear 65 and the second gear 66 are provided so as not to rotate relative thereto with the rotational axes thereof coinciding with each other. Here, the first gear 65 and the second gear 66 are supported on one shaft member supported by the associating mechanism support part 39.

The first rack 63 and the second rack 53 are racks each obtained by forming teeth on a long square bar. The first rack 63 is provided at the end of the slide member 62, which is located on the outer side in the axial direction of the windup shaft 34, and extends along the drawing and housing direction P of the shade 20. The second rack 53 is provided at the end of the cover moving member 52, which is located on the center side in the axial direction of the windup shaft 34, and is formed to extend along the moving direction of the cover moving member 52.

The first rack 63 and the second rack 53 are provided in positions (not limited to the positions parallel to each other) in which teeth thereof face each other in side view. The first rack 63 and the second rack 53 are provided at the locations at which they do not coincide with each other in the axial direction of the windup shaft 34. The transmission mechanism is supported by the associating mechanism support part 39 such that the first gear 65 meshes with the first rack 63 and the second gear 66 meshes with the second rack 53. That is, a shaft member supporting the first gear 65 and the second gear 66 is provided between the first rack 63 and the second rack 53 in side view.

Here, in the transmission mechanism, the number of teeth of the second gear 66 is set to be larger than the number of teeth of the first gear 65. That is, the amount of movement of the cover moving member 52 is set to be larger than the amount of movement of the slide member 62 pushed by the stay 40 that has entered the slit 4. Needless to say, the first gear 65 may be set to have the same number of teeth as the teeth of the second gear 66 or a larger number of teeth than the teeth of the second gear 66. That is, the gear ratio (reduction ratio) between the first gear 65 and the second gear 66 may be determined experimentally or empirically based on, for example, the amount of movement of the stay 40 that has entered the slit 4, the width dimension of the slit 4, and the moving track of the cover body 50.

Here, the second gear 66 having a diameter larger than that of the first gear 65 is provided to the associating mechanism support part 39 with the first gear 65 being sandwiched therebetween in the axial direction. The location of the slide member 62 is restricted in the direction orthogonal to the slide moving direction with the first rack 63 being sandwiched between the first gear 65 and the guide pieces 39b and also being sandwiched between the side surface of the first gear 65 and the associating mechanism support part 39 in the state in which the first rack 63 meshes with the first gear 65.

With the configuration described above, the associating mechanism 60 causes the cover moving member 52 to move linearly between the closed location and the open location along the direction orthogonal to the axial direction of the windup shaft 34. Then, the cover rotating member 57 is rotated upon linear movement of the cover moving member 52, so that the cover body 50 is operated to switch between the closed state and the open state.

While the description has been given of the example in which the transmission mechanism includes the first gear 65 and the second gear 66, the transmission mechanism is not limited thereto. That is, the transmission mechanism may be formed of one gear in a case where an amount of movement of the slide member 62 (stay 40 that has entered the slit 4) that is identical to or larger than the amount of movement of the cover body 50 (cover moving member 52) can be secured. In this case, it suffices that the first rack 63 of the slide member 62 and the second rack 53 of the cover moving member 52 are located at the same location in the axial direction of the windup shaft 34.

The description has been given of the example in which the slide member 62, the transmission mechanism, and the cover moving member 52 operate through the combination of a rack and a gear, which is not limited thereto. For example, the configuration may be made such that a transmission mechanism is formed of a rubber roller, the rubber roller is provided to be in contact with a slide member and a cover moving member, and the rubber roller is rotated upon movement of the slide member by the friction force between the rubber roller and the slide member as well as the cover moving member, to thereby move the cover moving member.

Description is given below of the operation of moving the cover body 50 along with the operation of drawing and housing the shade 20.

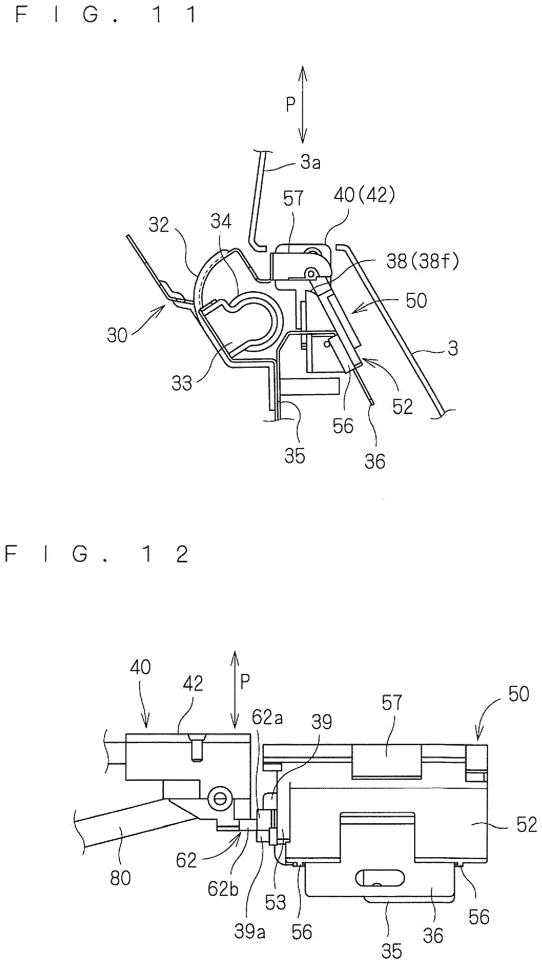

First, the operation of drawing the shade 20 is described. The shade 20 is housed as an initial state (see FIGS. 11 and 12). That is, the slit 4 is covered by the cover bodies 50 (mainly, cover rotating members 57) in the closed state and the stay 40 (see FIG. 3). More specifically, in this state, the stay 40, which is pulled toward the housing side by the windup force of the windup device 30, presses the slide member 62 toward the housing side and compresses the slide biasing member 64. Then, the cover moving member 52 is positioned at the closed location and the cover rotating member 57 is in the closed position.

First, the stay 40 positioned in the slit 4 is moved toward the drawing side of the drawing and housing direction P along the window 1. As the stay 40 start moving toward the drawing side, the slide member 62 pressed by the terminal member 42 of the stay 40 pulled by the windup force of the windup device 30 is pushed back by the biasing force of the slide biasing member 64. During this operation, the terminal member 42 of the stay 40 presses the protrusion 62b of the slide member 62. Then, the first gear 65 and the second gear 66 are rotated upon the movement of the first rack 63 toward the drawing side. Then, the cover moving member 52 including the second rack 53 meshing with the second gear 66 is moved from the closed location to the open location side. Here, the cover rotating member 57 is initially kept in the closed position.

Further, the stay 40 is moved toward the drawing side of the drawing and housing direction P, and the cover moving member 52 is moved to the location at which the portion of the cover rotating member 57 on the distal end side from the connecting shaft thereof abuts against the restriction surface 38f of the rotation restricting part 38. Then, the cover rotating member 57 starts changing its position from the closed position to the open position at the location of the abutment. Then, while abutting against the curved portion of the restriction surface 38f, the cover rotating member 57 gradually changes its position to the open position along the restriction surface 38f as the cover moving member 52 moves toward the open location side (see FIGS. 13 and 14).

The connecting shaft of the cover rotating member 57 moves beyond the curved portion of the restriction surface 38f, and the cover moving member 52 is moved to the location of the planar portion (location immediately after the portion of the cover rotating member 57 on the distal end side from the connecting shaft thereof abuts against the planar portion), so that the cover rotating member 57 enters the open position.

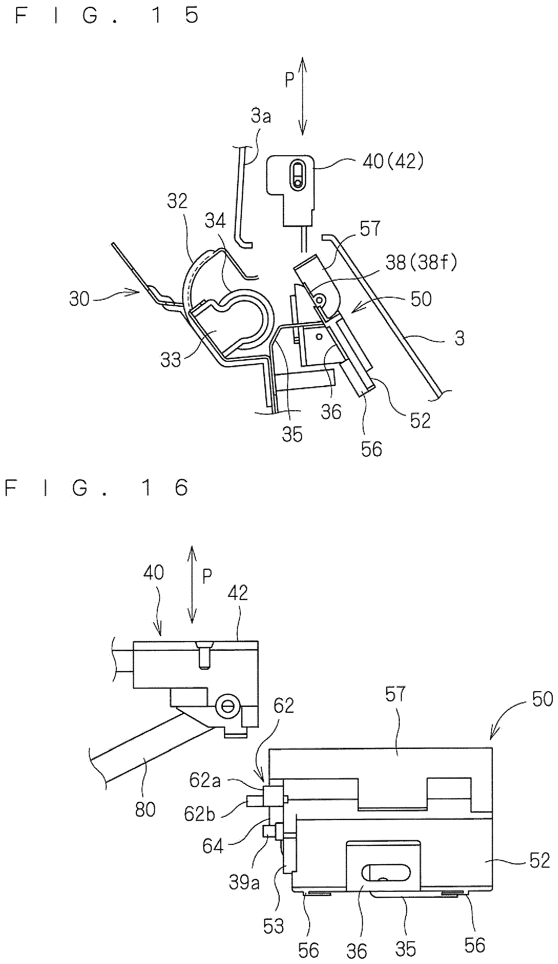

Then, the stay 40 is moved to the location at which it does not press the slide member 62 (location immediately before the stay 40 and the slide member 62 become apart from each other), the cover moving member 52 is positioned at the open location and the cover body 50 enters the open state (see FIGS. 15 and 16). That is, the portion of the slit 4 on the side of the stay 40, which is covered by the cover body 50, is opened. Also at the above-mentioned location, the portion on the center side in the longitudinal direction of the slit 4 is covered almost entirely by the stay 40 remaining in the slit 4.

When the stay 40 comes out of the slit 4 entirely, the slit 4 opened entirely (see FIG. 4). Then, the stay 40 is further moved to the location at which the shade 20 entirely shields the window 1, so that the shade 20 is drawn.

Next, the operation of housing the shade 20 is described.

The stay 40 is moved toward the housing side of the drawing and housing direction P along the window 1, whereby the shade 20 is wound by the windup force of the windup device 30 to be housed. When the stay 40 is moved to enter the slit 4 and starts pushing the slide member 62, the first rack 63 moves to the housing side, so that the first gear 65 and the second gear 66 are rotated in the opposite direction to the direction when the shade 20 is drawn. Then, the cover moving member 52 is moved from the open location to the closed location side. Here, the cover rotating member 57 is initially kept in the open position. In this state, the portion on the center side in the longitudinal direction of the slit 4 is covered almost entirely by the stay 40, and the side of the stay 40 remains open.

When the stay 40 is further moved toward the housing side of the drawing and housing direction P, the stay 40 pushes the protrusion 62b of the slide member 62, and the slide biasing member 64 starts to be compressed. Then, the connecting shaft of the cover rotating member 57 moves beyond the planar portion of the restriction surface 38f, and the cover moving member 52 is moved to the location of the curved portion (location immediately after the portion of the cover rotating member 57 on the distal end side from the connecting shaft thereof abuts against the curved portion), so that the cover rotating member 57 starts changing its position to the open position. While abutting against the curved portion of the restriction surface 38f, the cover rotating member 57 gradually changes its position to the closed position along the restriction surface 38f as the cover moving member 52 moves to the closed location side (see FIGS. 13 and 14).

The cover moving member 52 is moved to the location at which the portion of the cover rotating member 57 on the distal end side from the connecting shaft thereof becomes apart from the restriction surface 38f of the rotation restricting part 38, so that the cover rotating member 57 enters the closed position.

Then, when the stay 40 is moved to the location at which it pushes the slide member 62 the end (location at which the spring receiving part 62a of the slide member 62 abuts against the spring receiving part 39a of the associating mechanism support part 39), the cover moving member 52 is positioned at the closed location, whereby the cover body 50 enters the closed state (see FIGS. 11 and 12). Then, the slit 4 is covered entirely by the stay 40 and the cover bodies 50 (see FIG. 3). In this state, the stay 40 is pulled toward the housing side by the windup force of the windup device 30, and the cover body 50 is kept in the closed state while the slide member 62 is pressed against the stay 40. When the stay 40 is moved toward the housing side to this location, the shade 20 is housed.

The sunshade device 10 according to the present embodiment is configured to cause a drive mechanism part 90 to move the stay 40 through the pair of arms 80, to thereby automatically draw and house the shade 20 (see FIGS. 1 and 2).

Each of the pair of arms 80 includes a first member 82 and a second member 84.

One end of the first member 82 and the other end of the second member 84 are connected so as to rotate relative thereto (second connecting part C2). A part on the other end of the first member 82 is connected to the portion on the end side of the base 32 of the windup device 30 so as to rotate relative thereto (first connecting part C1). One end of the second member 84 is connected to the terminal member 42 of the stay 40 so as to rotate relative thereto (third connecting part C3). For example, the configuration in which a connecting shaft member is inserted through through-hole portions formed in the connecting targets and the connecting targets are connected to each other can be employed in the connecting parts C1 to C3.

That is, the pair of arms 80 are configured to move the stay 40 to the drawing and housing direction P of the shade 20 by being folded (see FIG. 1) and unfolded (see FIG. 2) at the locations of the second connecting parts C2.

More specifically, the first member 82 is a flat-rod-like member that includes an extending-toward-frame part 83a extending toward the side edge of the window 1 from the first connecting part C1 in the unfolded state of the arm 80, and an extending-along-frame part 83b extending along the side edge of the window 1 in a manner of bending from one end of the extending-toward-frame part 83a in the unfolded state of the arm 80. The second member 84 is a flat-rod-like member having an approximately linear shape.

That is, when the second connecting parts C2 move inwardly in the longitudinal direction of the windup device 30 and the pair of arms 80 are folded, the stay 40 is moved from the short side edge of the window 1 to the long side edge thereof, whereby the shade 20 is housed. Then, in the folded state in which the arms 80 are folded entirely, the shade 20 is housed.

Meanwhile, when the second connecting parts C2 move outwardly in the longitudinal direction of the windup device 30 and the pair of arms 80 are unfolded, the stay 40 is moved from the long side edge of the window 1 to the short side edge thereof, whereby the shade 20 is drawn. Then, in the unfolded state of the arms 80 in which the extending-along-frame parts 83b of the first members 82 and second members 84 become linear, the shade 20 enters the drawn state of entirely covering the window 1.

The drive mechanism part 90 is configured so as to rotate the first member 82 of the arm 80 about the first connecting part C1. Here, the drive mechanism part 90 includes a motor 92 and given links 94 each connected to the portion of the first member 82 that is located on the other end side with respect to the first connecting part C1. That is, the drive mechanism part 90 is configured to rotatively drive the first members 82 of the pair of arms 80 via the given links 94 by the motor 92. As a result, the pair of arms 80 are unfolded and folded to move the stay 40 in the drawing and housing direction P of the shade 20, which enables to draw and house the shade 20.

The drive mechanism part 90 may be provided with an operation part (not shown) capable of operating driving of the motor 92 to drive the motor 92 for drawing and housing through an operation of the operation part.

Needless to say, the pair of arms 80 are not limited to have the configuration in which the first member 82 includes the extending-toward-frame part 83a and the extending-along-frame part 83b. That is, arms may be configured such that the first arm is also formed to be substantially linear and that the first member and the second member become substantially linear as a whole.

While the sunshade device 10 has been descried by taking the example in which the stay 40 is moved through the pair of arms 80 driven by the drive mechanism part 90 to draw and house the shade 20, the stay 40 may be manually operated.

The sunshade device 10 may be configured such that the cover body is formed of only the cover moving member 52. That is, in a case where the space for retracting the cover moving member 52 through a linear movement on the plane on which the edges of the opening of the slit 4 extend can be secured, the following configuration may be employed, in which a cover moving member as the cover body is moved between the closed location for partially covering the slit 4 and the open location for opening the slit 4.

The sunshade device may be configured such that the cover body 50 is moved along the axial direction of the windup shaft 34. For example, there may be employed a configuration in which the transmission mechanism is composed of a bevel gear and two spur gears, the rotational force of the first spur gear meshing with the first rack of the slide member is transmitted as the rotational force of the second spur gear that rotates about an axis orthogonal to the axial direction of the windup shaft 34 through the bevel gear, and the rack provided in the cover body to extend along the axial direction of the windup shaft 34 is meshed with the second spur gear, to thereby move the cover body.

The sunshade device 10 having the above-mentioned configuration is configured such that the cover body 50, which is capable of operating switching between the closed state of partially covering the slit 4 and the open state of opening the slit 4 and capable of entirely covering the slit 4 in the closed state together with the stay 40 while the shade 20 is housed, is caused to operate switching between the closed state and the open state in association with the movement of the stay 40 by the associating mechanism 60 to be closed in the housed state of the shade 20. This enables to entirely cover the slit 4 in the housed state of the shade 20 even in a case where the shade 20 having the short side edge 22 and the long side edge 24 is used.

The slit 4 is covered by the stay 40 and the pair of cover bodies 50, which makes the stay 40 to have a reduced weight and a compact shape. Accordingly, higher strengths are not required for the pair of arms 80, the windup device 30, and the like, and a cost increase can be avoided. Also, a load imposed on the drive mechanism part 90 that moves the stay 40 can be reduced.

The cover body 50 is disposed so as to operate on the housing side with respect to the slit 4, which provides good appearance viewed from the inner side of a car and prevents a person or object from coming contact with the cover body 50 from the inner side of the car.

The associating mechanism 60 operates the cover body 50 to cover the slit 4 from the direction orthogonal to the axial direction of the windup shaft 34, and accordingly, the space for moving the cover body 50 in the axial direction of the windup shaft 34 can be omitted and the windup device 30 can be disposed in the full car width. Accordingly, the sunshade device 10 is also applicable to the case where it is difficult to secure the space in the axial direction.

The slide member 62 is provided to be pushed by the stay 40 that has entered the slit 4 and is biased toward the drawing direction of the shade 20 by the slide biasing member 64. The configuration is made such that the transmission mechanism conveys the movement of the slide member 62 as the movement of the cover moving member 52 in the cover body 50. This enables to perform the operation of opening/closing the cover moving member 52 with the aid of the moving force of the stay 40 toward the housing side of the drawing and housing direction P of the stay 40 that is moved when the shade 20 is housed.

The first gear 65 and the second gear 66 provided so as not to rotate relative thereto are configured to mesh with the first rack 63 of the slide member 62 and the second rack 53 of the cover body 50, respectively. The cover moving member 52 of the cover body 50 is moved through meshing of gears in this manner, whereby it is possible to move the cover body 50 accurately in association with the movement of the stay 40. Also, a change of the gear ratio between the first gear 65 and the second gear 66 enables to easily adjust an amount of movement of the cover body 50 to an amount of movement of the slide member 62. That is, design flexibility in the movement of the cover body 50 increases.

The cover body 50 includes the cover moving member 52 that is linearly moved between the open location and the closed location by the associating mechanism 60 and the cover rotating member 57 that is connected to the cover moving member 52 so as to rotate relative thereto and can change its position between the open position and the closed position. As described above, the slit 4 can be covered also in a case where the width direction of the slit 4 is not parallel to the moving direction of the cover moving member 52. Accordingly, the sunshade device 10 is also applicable to the case where it is difficult to secure the space for retracting the cover body 50 to the side in the width direction of the slit 4 through a linear movement.

The cover moving member 52 is guided by the guide part 36 to linearly move, and the rotation restricting part 38 restricts and permits the rotation of the cover rotating member 57 depending on the location of the cover moving member 52. Accordingly, the operation of opening/closing the cover body can be performed more accurately in a stable manner.

The cover body 50 and the associating mechanism 60 are supported by the support part 35 fixed to the windup device 30. Accordingly, the sunshade device 10 can achieve the configuration for opening/closing the slit 4 by itself, which can be installed in a vehicle well.

While the sunshade device 10 has been described above in detail, the foregoing description is in all aspects illustrative, and the present invention is not limited thereto. That is, numerous modifications and variations can be devised in the described aspects without departing from the scope of the invention.

### Description of Reference Symbols

- 1: window
- 3: rear package tray
- 4: slit
- 10: sunshade device
- 20: shade
- 22: short side edge
- 24: long side edge
- 30: windup device
- 34: windup shaft
- 36: guide part
- 38: rotation restricting part
- 40: stay
- 50: cover body
- 52: cover moving member
- 53: second rack
- 57: cover rotating member
- 59: rotation biasing member
- 60: associating mechanism
- 62: slide member
- 63: first rack
- 64: slide biasing member
- 65: first gear
- 66: second gear
- P: drawing and housing direction

## Claims

1. A sunshade device (10) disposable inside a rear package tray (3) as part of a window peripheral member and configured to shield a window (1) with a shade (20) drawn out through a slit (4) formed in said rear package tray (3), the sunshade device (10) comprising:
a windup device (30) including a windup shaft (34) supported so as to rotate about its axis;
said shade (20) including a short side edge (22) and a long side edge (24) opposed to each other and configured to be drawn from and housed in said windup device (30) through said slit (4), said long side edge (24) being attached to said windup shaft (34);
a stay (40) attached to said short side edge (22) of said shade (20);
a cover body (50) configured to switch to move between a closing state of partially covering said slit (4) and an opening state of opening said slit (4) and in said closing state, configured to cover said slit (4) together with said stay (40) in the state in which said shade (20) is housed; and
an associating mechanism (60) operating said cover body (50) to switch between said closing state and said opening state with the movement of said stay (40) such that said cover body (50) moves into said closing state in the state in which said shade (20) is housed,
**characterized in that**:
said associating mechanism (60) includes:
a slide member (62) provided so as to be moved along a drawing direction and a housing direction of said shade (20) by a movement of said stay (40) on a moving track;
a slide biasing member (64) biasing said slide member (62) toward said drawing direction of said shade (20); and
a transmission mechanism operating said cover body (50) to switch between said closing state and said opening state, in association with the movement of said slide member (62).

2. The sunshade device (10) according to claim 1, wherein said associating mechanism (60) operates said cover body (50) to cover said slit (4) from a direction orthogonal to an axial direction of said windup shaft (34).

3. The sunshade device (10) according to claim 1, wherein
said slide member (62) includes a first rack (63),
said cover body (50) includes a second rack (53), and
said transmission mechanism includes a first gear (65) meshing with said first rack (63) of said slide member (62) and a second gear (66) that is provided so as not to rotate relative to said first gear (65) with a rotational axis thereof coinciding with a rotational axis of said first gear (65) and meshes with said second rack (53) of said cover body (50).

4. The sunshade device (10) according to claim 1, wherein
said cover body (50) includes:
a cover moving member (52) linearly moved between a closed location and an open location along a direction orthogonal to an axial direction of said windup shaft (34) by said associating mechanism; and
a cover rotating member (57) connected to said cover moving member (52) so as to rotate relative thereto about a connecting shaft parallel to the axial direction of said windup shaft (34), and configured to change its position between an open position and a closed position so as to cover portions of said slit (4) that are opened on sides of said stay (40) in the housed state, wherein
said cover rotating member (57) is changed to the closed position upon movement of said cover moving member (52) to the closed location and is changed to the open position upon movement of said cover moving member (52) to the open location.

5. The sunshade device (10) according to claim 4, further comprising:
a guide part (36) guiding said cover moving member (52) so as to linearly move between said closed location and said open location along the direction orthogonal to the axial direction of said windup shaft (34);
a rotation biasing member (59) rotatively biasing said cover rotating member (57) against said cover moving member (52) toward the direction in which said cover rotating member (57) changes from said open position to said closed position; and
a rotation restricting part (38) abutting against said cover rotating member (57) to restrict the rotation of said cover rotating member (57) from said open position toward said closed position in the state in which said cover moving member (52) is positioned at said open location and to permit said rotation of said cover rotating member (57) in the state in which said cover moving member (52) is positioned at said closed location.

## Patentansprüche

1. Sonnenblendenvorrichtung (10), die in einer Heckablage (3) als Teil eines Fensterperipherieelements angeordnet sein kann und konfiguriert ist, um ein Fenster (1) mit einer Blende (20) abzuschirmen, die durch einen Schlitz (4) hindurch herausgezogen wird, der in der Heckablage (3) gebildet ist, wobei die Sonnenblendenvorrichtung (10) Folgendes umfasst:
eine Aufrollvorrichtung (30), die eine Aufrollwelle (34) umfasst, die getragen wird, um sich um ihre Achse herum zu drehen;
wobei die Blende (20) einen Rand (22) auf der kurzen Seite und einen Rand (24) auf der langen Seite umfasst, die einander gegenüberliegen und konfiguriert sind, um aus der Aufrollvorrichtung (30) durch den Schlitz (4) hindurch herausgezogen und darin verstaut zu werden, wobei der Rand (24) auf der langen Seite an der Aufrollwelle (34) angebracht ist;
eine Strebe (40), die an dem Rand (22) auf der kurzen Seite der Blende (20) angebracht ist;
einen Abdeckkörper (50), der konfiguriert ist, um umzuschalten, um sich zwischen einem Schließzustand, der darin besteht, den Schlitz (4) teilweise abzudecken, und einem Öffnungszustand, der darin besteht, den Schlitz (4) zu öffnen, zu bewegen, und in dem Schließzustand konfiguriert ist, um den Schlitz (4) zusammen mit der Strebe (40) in dem Zustand abzudecken, in dem die Blende (20) verstaut ist; und
einen Kopplungsmechanismus (60), der den Abdeckkörper (50) betätigt, damit er zwischen dem Schließzustand und dem Öffnungszustand mit der Bewegung der Strebe (40) umschaltet, so dass sich der Abdeckkörper (50) in dem Zustand, in dem die Blende (20) verstaut ist, in den Schließzustand bewegt,
**dadurch gekennzeichnet, dass**:
der Kopplungsmechanismus (60) Folgendes umfasst:
ein Gleitelement (62), das bereitgestellt wird, um in einer Ziehrichtung und einer Verstaurichtung der Blende (20) durch eine Bewegung der Strebe (40) auf einer Bewegungsspur bewegt zu werden;
ein Gleitvorspannelement (64), welches das Gleitelement (62) in Richtung auf die Ziehrichtung der Blende (20) vorspannt; und
einen Übertragungsmechanismus, der den Abdeckkörper (50) betätigt, damit er zwischen dem Schließzustand und dem Öffnungszustand in Verbindung mit der Bewegung des Gleitelements (62) umschaltet.

2. Sonnenblendenvorrichtung (10) nach Anspruch 1, wobei der Kopplungsmechanismus (60) den Abdeckkörper (50) betätigt, um den Schlitz (4) aus einer Richtung, die zu einer axialen Richtung der Aufrollwelle (34) orthogonal ist, abzudecken.

3. Sonnenblendenvorrichtung (10) nach Anspruch 1, wobei
das Gleitelement (62) eine erste Zahnstange (63) umfasst,
der Abdeckkörper (50) eine zweite Zahnstange (53) umfasst, und
der Übertragungsmechanismus ein erstes Zahnrad (65), das mit der ersten Zahnstange (63) des Gleitelements (62) kämmt, und ein zweites Zahnrad (66), das bereitgestellt wird, um sich in Bezug auf das erste Zahnrad (65) nicht zu drehen, wobei eine Drehachse desselben mit einer Drehachse des ersten Zahnrads (65) zusammenfällt, und mit der zweiten Zahnstange (53) des Abdeckkörpers (50) zu kämmen, umfasst.

4. Sonnenblendenvorrichtung (10) nach Anspruch 1, wobei der Abdeckkörper (50) Folgendes umfasst:
ein Abdeckungsbewegungselement (52), das zwischen einer geschlossenen Lage und einer offenen Lage in einer Richtung, die zu einer axialen Richtung der Aufrollwelle (34) orthogonal ist, durch den Kopplungsmechanismus linear bewegt wird; und
ein Abdeckungsdrehelement (57), das mit dem Abdeckungsbewegungselement (52) verbunden ist, um sich mit Bezug darauf um eine Verbindungswelle zu drehen, die zu der axialen Richtung der Aufrollwelle (34) parallel ist, und konfiguriert ist, um seine Position zwischen einer offenen Position und einer geschlossenen Position zu wechseln, um Abschnitte des Schlitzes (4) abzudecken, die auf den Seiten der Strebe (40) im verstauten Zustand geöffnet sind, wobei das Abdeckungsdrehelement (57) bei einer Bewegung des Abdeckungsbewegungselements (52) in die geschlossene Lage in die geschlossene Position gewechselt wird und bei einer Bewegung des Abdeckungsbewegungselements (52) in die offene Lage in die offene Position gewechselt wird.

5. Sonnenblendenvorrichtung (10) nach Anspruch 4, ferner umfassend:
ein Führungsteil (36), welches das Abdeckungsbewegungselement (52) führt, damit es sich zwischen der geschlossenen Lage und der offenen Lage in der Richtung, die zur axialen Richtung der Aufrollwelle (34) orthogonal ist, linear bewegt;
ein Drehvorspannelement (59), welches das Abdeckungsdrehelement (57) gegen das Abdeckungsbewegungselement (52) in der Richtung, in der das Abdeckungsdrehelement (57) von der offenen Position in die geschlossene Position wechselt, drehmäßig vorspannt; und
ein Dreheinschränkungsteil (38), das an dem Abdeckungsdrehelement (57) anliegt, um die Drehung des Abdeckungsdrehelements (57) von der offenen Position in die geschlossene Position in dem Zustand, in dem das Abdeckungsbewegungselement (52) in der offenen Lage positioniert ist, einzuschränken, und um die Drehung des Abdeckungsdrehelements (57) in dem Zustand, in dem das Abdeckungsbewegungselement (52) in der geschlossenen Lage positioniert ist, zu erlauben.

## Revendications

1. Dispositif pare-soleil (10) pouvant être disposé à l'intérieur d'une plage arrière (3) en tant que partie d'un organe périphérique de fenêtre et configuré pour protéger une fenêtre (1) avec un store (20) sorti à travers une fente (4) formée dans ladite plage arrière (3), le dispositif pare-soleil (10) comprenant :
un dispositif de remontée (30) comprenant un arbre de remontée (34) supporté de façon à tourner autour de son axe ;
ledit store (20) comportant un bord de côté court (22) et un bord de côté long (24) opposés l'un à l'autre et configurés pour être tirés depuis et logés dans ledit dispositif de remontée (30) à travers ladite fente (4), ledit bord de côté long (24) étant fixé audit arbre de remontée (34) ;
un étai (40) fixé audit bord de côté court (22) dudit store (20) ;
un corps de couverture (50) configuré pour se déplacer en passant d'un état de fermeture couvrant partiellement ladite fente (4) à un état d'ouverture couvrant ladite fente (4) et dans ledit état de fermeture, configuré pour couvrir ladite fente (4) conjointement audit étai (40) dans l'état dans lequel ledit store (20) est logé ; et
un mécanisme d'association (60) actionnant ledit corps de couverture (50) pour passer dudit état de fermeture audit état d'ouverture avec le déplacement dudit étai (40) de sorte que ledit corps de couverture (50) se déplace dans ledit état de fermeture dans l'état dans lequel ledit store (20) est logé,
**caractérisé en ce que** :
ledit mécanisme d'association (60) comporte :
un organe de coulissement(62) prévu de façon à être déplacé le long d'une direction de traction et d'une direction de logement dudit store (20) par un déplacement dudit étai (40) sur un rail de déplacement ;
un organe de sollicitation de coulissement (64) sollicitant ledit organe de coulissement (62) vers ladite direction de traction dudit store (20) ; et
un mécanisme de transmission actionnant ledit corps de couverture (50) pour passer dudit état de fermeture audit état d'ouverture, en association au déplacement dudit organe de coulissement (62).

2. Dispositif pare-soleil (10) selon la revendication 1, dans lequel ledit mécanisme d'association (60) actionne ledit corps de couverture (50) pour couvrir ladite fente (4) depuis une direction orthogonale à une direction axiale dudit arbre de remontée (34).

3. Dispositif pare-soleil (10) selon la revendication 1, dans lequel
ledit organe de coulissement (62) comporte une première crémaillère (63),
ledit corps de couverture (50) comporte une seconde crémaillère (53), et
ledit mécanisme de transmission comporte un premier pignon (65) s'engrenant avec ladite première crémaillère (63) dudit organe de coulissement (62) et un second pignon (66) qui est prévu pour ne pas tourner par rapport audit premier pignon (65) avec un axe de rotation de celui-ci coïncidant avec un axe de rotation dudit premier pignon (65) et s'engrène avec ladite seconde crémaillère (63) dudit corps de couverture (50).

4. Dispositif pare-soleil (10) selon la revendication 1, dans lequel
ledit corps de couverture (50) comporte :
un organe de déplacement de couverture (52) déplacé linéairement entre un emplacement fermé et un emplacement ouvert le long d'une direction orthogonale à une direction axiale dudit arbre de remontée (34) par ledit mécanisme d'association ; et
un organe de rotation de couvercle (57) raccordé audit organe de déplacement de couvercle (52) de façon à tourner par rapport à celui-ci autour d'un arbre de raccordement parallèle à la direction axiale dudit arbre de remontée (34), et configuré pour changer sa position entre une position ouverte et une position fermée de façon à couvrir des portions de ladite fente (4) qui sont ouvertes sur des côtés dudit étai (40) dans l'état logé, dans lequel
ledit organe de rotation de couvercle (57) passe à la position fermée lors d'un déplacement dudit organe de déplacement de couvercle (52) jusqu'à l'emplacement fermé et passe à la position ouverte lors d'un déplacement dudit organe de déplacement de couvercle (52) jusqu'à l'emplacement ouvert.

5. Dispositif pare-soleil (10) selon la revendication 4, comprenant en outre :
une partie de guidage (36) guidant ledit organe de déplacement de couvercle (52) de façon à se déplacer linéairement entre ledit emplacement fermé et ledit emplacement ouvert le long de la direction orthogonale à la direction axiale dudit arbre de remontée (34) ;
un organe de sollicitation de rotation (59) sollicitant en rotation ledit organe de rotation de couvercle (57) contre ledit organe de déplacement de couvercle (52) vers la direction dans laquelle ledit organe de rotation de couvercle (57) passe de ladite position ouverte à ladite position fermée ; et
une partie de limitation de rotation (38) butant contre ledit organe de rotation de couvercle (57) pour limiter la rotation audit organe de rotation de couvercle (57) de ladite position ouverte vers ladite position fermée dans l'état dans lequel ledit organe de déplacement de couvercle (52) est positionné au niveau dudit emplacement ouvert et pour permettre ladite rotation dudit organe de rotation de couvercle (57) dans l'état dans lequel ledit organe de déplacement de couvercle (52) est positionné au niveau dudit emplacement fermé.
